# EUROPÄISCHE PATENTSCHRIFT

(11) **EP 2 240 354 B1**
(45) Veröffentlichungstag und Bekanntmachung des Hinweises auf die Patenterteilung: **25.04.2012**
(21) Anmeldenummer: 08870249.3
(22) Anmeldetag: 23.10.2008
(51) Int. Cl.: B60W 30/08, B60T 8/1755

(54) **VORRICHTUNG, VERFAHREN UND COMPUTERPROGRAMM ZUR KOLLISIONSVERMEIDUNG ODER ZUR VERMINDERUNG DER KOLLISIONSSCHWERE INFOLGE EINER KOLLISION FÜR FAHRZEUGE, INSBESONDERE NUTZFAHRZEUGE**
DEVICE, METHOD, AND COMPUTER PROGRAM FOR AVOIDING COLLISIONS OR MINIMIZING THE COLLISION SEVERITY IN CASE OF A COLLISION, FOR VEHICLES, PARTICULARLY COMMERCIAL VEHICLES
DISPOSITIF, PROCÉDÉ ET PROGRAMME INFORMATIQUE POUR EMPÊCHER UNE COLLISION OU POUR RÉDUIRE LA GRAVITÉ D'UNE COLLISION POUR DES VÉHICULES, EN PARTICULIER DES VÉHICULES UTILITAIRES

(30) Priorität: 04.01.2008 DE 102008003205
(43) Veröffentlichungstag der Anmeldung: 20.10.2010
(73) Patentinhaber: WABCO GmbH, 30453 Hannover (DE)
(72) Erfinder: BREUER, Karsten, 31867 Lauenau (DE); KITTERER, Hartmut, 89231 Neu-Ulm (DE)
(74) Vertreter: Lauerwald, Jörg
(86) Internationale Anmeldenummer: PCT/EP2008/009088
(87) Internationale Veröffentlichungsnummer: WO 2009/086857

(56) Entgegenhaltungen:
- WO-A-2007/055215
- WO-A-2007/132323
- US-A1- 2005 280 520
- US-A1- 2006 173 621
- US-A1- 2007 046 449
- US-A1- 2007 299 610

## Beschreibung

Die vorliegende Erfindung betrifft eine Vorrichtung zur Kollisionsvermeidung oder zur Verminderung der Kollisionsschwere infolge einer Kollision für Fahrzeuge, insbesondere Nutzfahrzeuge, umfassend eine Eingabeeinheit zur Eingabe von verkehrssituationsbezogenen Kriterien und zur Ermittlung von verkehrssituationsbezogenen Schwellenwerten, eine Erfassungseinheit zur Erfassung von Objekten im Umfeld des Fahrzeuges, eine Messeinheit zur Bestimmung des Bewegungszustandes des Fahrzeuges, eine Steuereinheit zur Verarbeitung der von der Eingabeeinheit, der Erfassungseinheit und der Messeinheit erhaltenen Informationen und zur Erzeugung von Steuerungssignalen zur Ansteuerung von den Bewegungszustand des Fahrzeugs betreffenden Baueinheiten, und eine Ausgabeeinheit zur Ausgabe der erzeugten Steuerungssignale. Die Erfindung bezieht sich weiterhin auf ein entsprechendes Verfahren und ein Computerprogramm.

Fahrzeuge, insbesondere Nutzfahrzeuge, werden zunehmend mit einer Sensorik ausgerüstet, mit denen das Umfeld des Fahrzeugs erfasst werden kann. Die Sensorik kann zum Betreiben von Assistenz- und Sicherheitssystemen verwendet werden. Das grundlegende Prinzip dieser Systeme ist dabei, dass ein gewisser Wert für eine für das Fahrzeug relevante Größe vorgegeben wird (Sollwert). Bei Assistenz- und Sicherheitssystemen betreffen diese Größen insbesondere den Bewegungszustand des Fahrzeugs, beispielsweise die Fahrzeuggeschwindigkeit. Mit einem geeigneten Messsystem wird der aktuelle Wert dieser Größe gemessen (Istwert). Mit Hilfe einer Steuereinheit wird der aktuelle Istwert mit dem Sollwert verglichen. Unterscheidet sich der istwert vom Sollwert, erzeugt die Steuereinheit ein Steuerungssignal, mit dem den Bewegungszustand des Fahrzeuges betreffende Baueinheiten, wie etwa ein Bremssystem oder eine Motorsteuerung, angesteuert werden kann. Die Ansteuerung dieser Baueinheiten bewirkt, dass sich der Istwert dem Sollwert solange annähert, bis beide Werte einander entsprechen. In diesem Fall würde also durch Ansteuerung des Bremssystems oder der Motorsteuerung die Geschwindigkeit solange verändert werden, bis das Fahrzeug die vorgegebene Geschwindigkeit erreicht hat. Auf diesem Prinzip beruht beispielsweise ein Tempomat.

Ein weiteres, typisches und verbreitet eingesetztes Beispiel einer solchen Assistenzfunktion ist die adaptive Geschwindigkeitsregelung (ACC, Adaptive Cruise Control). Mit Hilfe eines Abstandssensors wird der Abstand zu einem vorausfahrenden Fahrzeug bestimmt und mittels einer Geschwindigkeitsregelanlage automatisch eingeregelt. Je nach Ausführung kann der Abstand, der zum vorausfahrenden Fahrzeug eingehalten werden soll, manuell eingegeben oder werkseitig fest vorgegeben werden. Zudem kann der einzuhaltende Abstand automatisch an die aktuelle Fahrzeuggeschwindigkeit angepasst werden. Die Größe des Abstandes zum vorausfahrenden Fahrzeug ist ein Beispiel für ein verkehrssituationsbezogenes Kriterium bzw. eines verkehrsbezogenen Schwellenwertes. Das Einregeln des Abstandes wird beispielsweise durch Erhöhung bzw. Reduzierung der Drehmomentenanforderung an den Motor oder zusätzliche Betätigung der Bremsen bewerkstelligt. Die vom ACC maximal ausgelösten Verzögerungen liegen gemäß der ISO-Normung typischerweise deutlich unter denjenigen von Vollbremsungen, da es sich bei ACC nur um ein Komfortsystem handelt. Die Detektions-Zuverlässigkeit der heute verwendeten Abstandssensoren reicht i.d.R. nicht aus, um darauf basierend eine Vollbremsung auszulösen. Daher wird bei diesen Systemen die Verzögerung künstlich beschränkt, um im Falle einer Fehlauslösung weder den Fahrer des eigenen Fahrzeugs noch den nachfolgenden Verkehr zu gefährden. Zusätzlich kann der Fahrer ein solches System zu jeder Zeit überstimmen, indem er beispielsweise Gas- oder Bremspedal betätigt. Zudem liegt es in seiner Entscheidungsfreiheit, ob er ACC überhaupt aktiviert. Ist bei aktivem ACC zur Vermeidung eines Unfalles eine höhere als die maximal vom ACC bereitgestellte Verzögerung erforderlich, liegt es in der Verantwortlichkeit des Fahrers, diese aufzubringen. Folglich sind ACC-Systeme nur sehr bedingt zur Kollisionsvermeidung oder zur Verminderung der Kollisionsschwere infolge einer Kollision geeignet.

Aus der EP 1 559 607 A1 ist ein Verfahren bekannt, das unabhängig von einem aktivem ACC bei einer drohenden Kollision den Fahrer durch eine Warnung dazu auffordert, eine unfallvermeidende Aktion wie etwa eine Notbremsung durchzuführen. Darüber hinaus existieren auch Ansätze zur Unfallvermeidung oder Unfallfolgenverminderung, die allgemein als Collision Mitigation System (CMS) bezeichnet werden.

Die WO2007055215A1 ist als nächstliegenden Stand der Technik zu sehen und zeigt ein Objekterkennungssystem mit einer Erfassungseinheit zur Erfassung von Objekten im Umfeld des Fahrzeugs, einer Messeinheit zur Bestimmung des Bewegungszustandes des eigenen Fahrzeuges, einer Steuereinheit zur Verarbeitung der von der Erfassungs- und Messeinheit ermittelten Daten und zur Erzeugung von Steuerungssignalen zur Ansteuerung von den Bewegungszustand des Fahrzeuges betreffenden Baueinheiten, und eine Ausgabeeinheit zur Ausgabe der erzeugten Steuerungssignale. Die Erfassungseinheit verwendet mehrere Positionserkennungskriterien von verschiedenen Messsystemen; wie zum Beispiel einem Radarsystem oder einer Stereokamera. Das Steuerungssignal kann zur Kollisionsvermeidung allgemein die Bremssignale der hydraulischen Bremse beeinflussen, wobei der Bremsdruck an allen Bremsen gleichzeitig angepasst wird.

Allen solchen Systemen gemein ist i.d.R. die Verwendung derselben Abstandssensoren, wie sie auch für ACC-Systeme verwendet werden. Deren bekannte Einschränkungen bestehen etwa in einer nicht zuverlässigen Detektion von bereits stehenden Fahrzeugen oder möglichen Fehldetektionen, die beispielsweise durch Mehrfachreflexionen an Randbebauungen (Leitplanken, Schilder, Brücken) ausgelöst werden können. Eine exakte Vermessung der Objektbreite und der lateralen Ablage in Relation zur eigenen Bewegungsrichtung ist mit den allermeisten am Markt verfügbaren Abstandssensoren ebenfalls nicht oder nur sehr unzureichend möglich. Daher kann eine bei Kollisionsvermeidungssystemen übliche Abschätzung eines möglichen Ausweichmanövers entweder überhaupt nicht oder nur sehr ungenau durchgeführt werden. Zudem existiert keine redundante Bestätigung eines relevanten Objektes, welche für ein sicherheitsrelevantes System, etwa zur Auslösung einer autonomen Notbremsung, erforderlich ist.

Die Gefahr liegt dabei darin, dass bei wiederholt auftretenden Fehlwarnungen der Fahrer dazu neigt, diese zu ignorieren, was für den Fall, dass wirklich eine gefährliche Situation vorliegt, schwere Folgen nach sich ziehen kann und die Vorrichtung nutzlos wird. Bei fehlerhaft ausgelösten Notbremsungen besteht zudem die Gefahr von Auffahrunfällen durch nachfolgende Fahrzeuge, was bei einer nicht kollisionskritischen Situation ebenfalls nicht akzeptabel ist.

Als Folge müssen daher heute entweder deutliche Einschränkungen der Leistungsfähigkeit oder eine erhöhte Anzahl von Fehlwarnungen/-reaktionen solcher Kollisionswam/- folgenminderungssysteme billigend in Kauf genommen werden.

Eine weitere sensorgestützte und weit verbreitete Assistenzfunktion stellt das Lane Departure Warning System (LDW, Spurhalteassistent/Spurverlassenswamung) dar. LDW-Systeme sind videogestützte Systeme zur Erfassung des Fahrbahnverlaufs (Rand- oder Fahrbahnmarkierungen), die erkennen, ob das Fahrzeug die vorgeschriebene Fahrspur unbeabsichtigt (d.h. ohne Setzen der Richtungsanzeige durch den Fahrer) verlassen wird. Derartige Systeme sind insbesondere dann hilfreich, wenn der Fahrer durch andere Tätigkeiten abgelenkt ist (z.B. Bedienung des Radios) oder durch Konzentrationsmangel generell Probleme hat, dem Spurverlauf korrekt zu folgen. Derartige Systeme dienen jedoch nicht zur Kollisionsvermeidung mit vorausfahrenden Fahrzeugen, sondern zur Vermeidung von Unfällen, die darauf zurückzuführen sind, dass die eigene Fahrspur unbeabsichtigt verlassen wurde.

Aufgabe der vorliegenden Erfindung ist es, ein System zur Kollisionsvermeidung oder zur Verminderung der Kollisionsschwere infolge einer Kollision für Fahrzeuge, insbesondere Nutzfahrzeuge bereitzustellen, welches die Nachteile des Standes der Technik zumindest reduziert und Warnungen und/oder autonome Notbremsungen und/oder Ausweichmanöver rechtzeitig und nur dann auslöst, wenn es die Verkehrssituation wirklich erforderlich machen sollte. Dabei soll die Möglichkeit geschaffen werden, auch die Verkehrssituation der benachbarten Spuren zu berücksichtigen.

Die Erfindung löst diese Aufgabe dadurch, dass die Erfassungseinheit ein oder mehrere objektvermessende Systeme und ein oder mehrere bildverarbeitende Videosysteme, insbesondere die Spurkamera eines LDW-Systems, zur Bestimmung von Abstand, Breite, Relativgeschwindigkeit, lateraler Ablage und/oder Art der Objekte im Umfeld des Fahrzeuges aufweist. Durch den Einsatz von objektvermessenden Systemen zusammen mit einem bildverarbeitenden Videosystem wird einerseits eine Detektions-Redundanz geschaffen, die Objekte und deren Relevanz mit unterschiedlichen physikalischen Methoden zu ermitteln. Weiterhin ermöglicht dieser Ansatz auch eine sogenannte Datenfusion. Diese ermöglicht bei redundanter Ortung desselben Objektes die Verwendung der qualitativ jeweils besten Objekt-Signale. Im Vergleich zu heutigen Kollisionswam/folgenminderungsssystemen wird es so ermöglicht, Objekte sicherer zu charakterisieren und so die Gefahr von Fehlinterpretationen zu verringern. Mit Hilfe einer erweiterten Betriebssoftware können die Daten, die vom aus LDW-Systemen bekannten Videosystem geliefert werden, nicht nur zur Bestimmung der Spurlage und Spurradius der eigenen Fahrspur, sondern auch zur Bestimmung der Breite, lateralen Ablage, Abstand, Relativgeschwindigkeit und Art von Objekten verwendet werden. Die so erhaltenen Werte für diese Größen können dann mit denen verglichen werden, die mit Hilfe der objektvermessenden Systeme gewonnen werden, welche beispielsweise aus CMS-Systemen bekannt sind. Die Ermittlung der Werte dieser Größen basierend auf zwei unterschiedlichen Messprinzipien erhöht die Zuverlässigkeit der ermittelten Daten. Darüber hinaus ist die Ermittlung dieser Werte nicht generell nur auf Objekte beschränkt, die sich auf der eigenen Fahrspur befinden. Dabei liegt der Erfindung die Idee zugrunde, keine zusätzliche Umfeldsensorik aufbauen zu müssen, sondern Sensorsysteme zu verwenden, die üblicherweise in Nutzfahrzeugen heute schon zum Betreiben von Assistenz- und Sicherheitssystemen bereits vorhanden sind.

Die Erfindung wird vorteilhaft weitergebildet dadurch, dass die objektvermessenden Systeme ein Lasersystem umfassen. Die Verwendung von Lasersystemen bietet einige Vorteile, wie im folgenden beschrieben wird. In vielen Fällen werden zur Bestimmung des Abstandes auf Radar basierende Systeme eingesetzt. Radar bietet zwar die Möglichkeit, Abstand und Relativgeschwindigkeit exakt vermessen zu können, weist jedoch den Nachteil auf, aufgrund ihrer schlechten horizontalen Auflösung hinsichtlich der lateralen Ablage nur recht ungenaue Daten und bezüglich der Objektbreite keine Informationen liefern zu können.

Eine vorteilhafte Weiterbildung der Erfindung zeichnet sich dadurch aus, dass das Lasersystem und das Videosystem multidirektional einsetzbar sind. Dabei können das Lasersystem mehrere mehrstrahlige und/oder scannende Lasersensoren und das Videosystem mehrere Videokameras umfassen. Für die in der Erfindung vorgeschlagene Prüfung der redundanten Ortung durch ein objektvermessendes System in Kombination mit einem Videosystem werden aber von beiden Systemen möglichst exakte Informationen über die Lage des Objektes benötigt, damit sichergestellt ist, dass es sich bei den jeweils georteten Objekten um dasselbe handelt. Mehrstrahlige und/oder scannende Lasersensoren bieten hier die Möglichkeit, das objektvermessende System so zu gestalten, dass es exaktere Lageinformationen des detektierten Objektes liefert, was letztlich zu einer verbesserten Verfügbarkeit und Zuverlässigkeit der redundanten Objektdetektion führt. Auf diese Weise kann das Umfeld des eigenen Fahrzeuges, in welchem die Lage und die Geschwindigkeit von Objekten bestimmt werden soll, genau definiert werden. Je nach eingesetztem Fahrzeug und angestrebtem Sicherheitsstandard kann es sinnvoll sein, auch weiter entfernte Objekte zu erfassen, die sich noch hinter dem eigenen Fahrzeug sowohl auf der eigenen als auch auf den benachbarten Spuren befinden. Die Verwendung multidirektional einsetzbarer Laser- und Videosysteme ermöglicht es, die Abtastung flexibel auf die Anforderungen des jeweiligen Einzelfalls durch eine entsprechende Wahl der Anzahl, Ausrichtung und Reichweite der einzelnen Lasersensoren und/oder den abgetasteten Sektor der scannenden Lasersensoren sowie der einzelnen Videokameras anzupassen.

Die vorliegende Erfindung wird vorteilhaft durch eine Anzeigevorrichtung zur Ausgabe einer Warnung weitergebildet. Diese ist vorzugsweise im Cockpit des Fahrzeuges angeordnet, so dass der Fahrer eine Information darüber erhält, dass der von der Steuereinheit aufgrund der aktuellen Verkehrssituation ermittelte verkehrssituationsbezogene Kennwert den eingegebenen verkehrssituationsbezogenen Schwellenwert überschritten hat. Ein steigender verkehrssituationsbezogener Kennwert repräsentiert eine zunehmend kritischer werdende aktuelle Verkehrssituation, so dass die Warnung dem Fahrer signalisiert, dass er eine Aktion zur Entschärfung der Verkehrssituation einleiten sollte, beispielsweise die Geschwindigkeit zu reduzieren, indem er die Gaspedalstellung verringert und/oder eine Bremsung und/oder ein Ausweichmanöver einleitet.

Vorteilhafterweise weist die Erfindung ein Bremssystem zur Betätigung von Bremsen auf, wobei jede Bremse einzeln und mit unterschiedlicher Intensität betätigbar ist. Die Einbeziehung eines Bremssystems in die vorliegende Erfindung ermöglicht es, nicht nur eine Warnung an den Fahrer ausgegeben, sondern auch eine Bremsung autonom, also ohne aktives Eingreifen des Fahrers, auszulösen. Unfälle, die dadurch entstehen können, dass der Fahrer entsprechende Warnungen ignoriert oder übersieht, können so verhindert werden. Die Möglichkeit, jede Bremse einzeln und mit unterschiedlicher Intensität zu betätigen, schafft die Basis für den Einsatz eines elektronischen Stabilitätsprogramms ESP und/oder eines Antiblockiersystems ABS, so dass die autonom vorgenommene Bremsung nicht zu Instabilitäten des Fahrzeugs führt. Derartige Instabilitäten könnten wiederum weitere Gefahrenquellen darstellen, beispielsweise, indem das Fahrzeug ins Schleudern kommt, die Spur nicht mehr halten kann oder umkippt.

Eine vorteilhafte Weiterbildung der Erfindung ist durch eine Motorsteuerung zur Steuerung der Drehmomentenabgabe eines Motors charakterisiert. Für den Fall, dass eine Bremsung autonom veranlasst wird, ist es notwendig, die Drehmomentenabgabe des Motors aufzuheben, um die maximale Bremswirkung entfalten zu können. Die Motorsteuerung muss in der Lage sein, die Drehmomentenabgabe auch dann aufzuheben, wenn der Fahrer das Gaspedal noch betätigt oder wenn ein Tempomat eingeschaltet ist.

Vorzugsweise ist ein automatisiertes Getriebe zur Öffnung einer Kupplung und zur Unterbrechung des Drehmomentenflusses bei Betätigen der Bremsen vorgesehen. Die Unterbrechung des Drehmomentenflusses dient dazu, zu gewährleisten, dass der Motor während der Bremsung nicht "abgewürgt" wird und der Fahrer so beispielsweise die Lenkkraftunterstützung verliert oder es zu einem Blockieren der Antriebsräder kommt. Durch die im vorigen Absatz beschriebene Aufhebung der Drehmomentenabgabe auch bei betätigtem Gaspedal wird in diesem Fall verhindert, dass der Motor überdreht werden kann. Statt dessen wird die Motorsteuerung ohne Zutun des Fahrers eine Leerlaufdrehzahl einstellen.

Eine weitere Ausführungsform der vorliegenden Erfindung zeichnet sich durch ein automatisches Getriebe mit einem Drehmomentenwandler zur Wandlung des Drehmomentenflusses aus. Statt eines automatisierten Getriebes mit automatischer Kupplungsbetätigung kann statt dessen auch ein automatisches Getriebe mit Dehmomentenwandler eingesetzt werden. Zwar wird bei einem solchen Getriebe der Drehmomentenfluss vom Motor an die Räder nicht unterbrochen, aber durch den im beispielsweise hydraulisch ausgeführten Drehmomentenwandler möglichen Schlupf wird ein "Abwürgen" des Motors ebenfalls verhindert.

Eine vorteilhafte Ausführung der Erfindung umfasst ein Lenksystem zur Betätigung einer Lenkung. Für den Fall, dass das Assistenzsystemeine Überschreitung des verkehrssituationsbezogenen Schwellenwertes festgestellt hat, kann es in dieser Ausführung der Erfindung nicht nur eine Warnung an den Fahrer und/oder eine Bremsung veranlassen, sondern auch aktiv ein Ausweichmanöver für den Fall ausführen, dass sich eine Kollision mit dem vorausfahrenden Fahrzeug nicht mehr durch eine Bremsung vermeiden lässt.

Ein weiterer Aspekt der vorliegenden Erfindung betrifft ein Verfahren zur Kollisionsvermeidung oder zur Verminderung der Kollisionsschwere infolge einer Kollision insbesondere Nutzfahrzeuge, umfassend folgende Schritte:
- Eingeben von verkehrssituationsbezogenen Kriterien und Ermittlung mindestens eines verkehrssituationsbezogenen Schwellenwertes, mittels einer Eingabeeinheit,
- Bestimmen von Abstand, Breite, Relativgeschwindigkeit und der lateralen Ablage der Objekte relativ zum Fahrzeug mittels einer Erfassungseinheit,
- Bestimmen des Bewegungszustandes des eigenen Fahrzeuges mittels einer Messeinheit,
- Verarbeiten der von der Eingabeeinheit, der Erfassungseinheit und der Geschwindigkeitsmesseinheit erhaltenen Daten mittels einer Steuereinheit zu mindestens einem verkehrssituationsbezogenem Kennwert,
- Erzeugen von Steuerungssignalen zur Ansteuerung von den Bewegungszustand des Fahrzeugs betreffenden Baueinheiten mittels der Steuereinheit, falls ein, mehrere oder alle Kennwert(e) über seinem/ihren jeweiligen Schwellenwert(en) liegen,
- Ausgeben der erzeugten Steuerungssignale mittels der Ausgabeeinheit an Elemente zur Beeinflussung der Bewegung des Fahrzeugs sowie an eine Anzeigevorrichtung.

Das Verfahren wird in vorteilhafter Weise dadurch weitergebildet, dass die Steuerungssignale auch zur Ausgabe einer Warnung verwendet werden. Diese Warnung kann dem Fahrer des Fahrzeuges gezeigt werden, der so darauf aufmerksam gemacht wird, dass eine kritische Verkehrssituation vorliegt, und er eine Bremsung oder ein Ausweichmanöver vornehmen sollte.

Eine vorteilhafte Weiterentwicklung des efindungsgemäßen Verfahrens besteht darin, dass die Warnung optisch und/oder akustisch und/oder haptisch ausgebbar ist. Es kann auf verschiedene Weisen sichergestellt werden, dass der Fahrer die Warnung nicht ignoriert. Es ist zum Beispiel denkbar, Warnsignale der oben genannten Art auszugeben, deren Intensität solange ansteigt, bis dass der Fahrer eine Bremsung veranlasst.

Eine vorteilhafte Weiterentwicklung des erfindungsgemäßen Verfahrens charakterisiert sich dadurch, dass die Steuerungssignale zur Ansteuerung eines Bremssystems zur Betätigung von Bremsen verwendbar sind, wobei jede Bremse einzeln und mit unterschiedlicher Intensität betätigt werden kann.

Vorteilhaft ist ferner, dass die Steuerungssignale in einer Motorsteuerung zur Steuerung der Drehmomentenabgabe eines Motors verwendbar sind.

In einer besonders bevorzugten Ausgestaltung des erfindungsgemäßen Verfahrens sind die Steuerungssignale in einem automatisierten Getriebe zur Öffnung einer Kupplung und zur Unterbrechung des Drehmomentenflusses bei Betätigen der Bremsen verwendbar.

Eine vorteilhafte Weiterbildung des erfindungsgemäßen Verfahrens besteht darin, dass die Steuerungssignale zur Ansteuerung eines Lenksystems zur Betätigung einer Lenkung verwendbar sind. Hierzu umfassen vorteilhafterweise die Steuerungssignale Informationen über den aktuellen Zustand von Fluchträumen zur Vermeidung einer Kollision. Unter Fluchträumen werden nahe Freir-äume verstanden, die ein Fahrzeug zur Vermeidung einer Kollision nutzen kann.

Die Vorrichtung und das Verfahren entsprechend der vorangegangenen Ausführungsformen können auch dahingehend angepasst werden, dass sie neben dem eigenen Bewegungspfad auch die Verkehrssituation auf seitlich danebenliegenden Räumen überwacht. Ein einfacher Ansatz zur Auslösung einer Notbremsung geht davon aus, dass das eigene Fahrzeug stets den notwendigen seitlichen Raum haben wird, um ein Ausweichmanöver durchführen zu können. Es findet keine Bewertung der seitlichen Fluchträume statt. Dadurch wird in Situationen, wo dieser Raum tatsächlich nicht zur Verfügung steht, eine Notbremsung stets zu spät ausgelöst. Wird die Vorrichtung/das Verfahren dahingehend genutzt, dass es auch diese seitlichen Fluchträume überwacht, kann in den Fällen, wo ein Ausweichmanöver seitlich blockiert ist, der Schwellwert zur Auslösung der Notbremsung dahingehend verändert werden, dass diese rechtzeitig zur vollständigen Unfallvermeidung erfolgen kann.

Ein weiterer Aspekt der vorliegenden Erfindung liegt in einem Computerprogramm zur Kollisionsvermeidung oder zur Verminderung der Kollisionsschwere infolge einer Kollision für Fahrzeuge, insbesondere Nutzfahrzeuge, mit Programmmitteln zum Veranlassen eines Computers, die folgenden Schritte auszuführen, wenn das Computerprogramm auf dem Computer ausgeführt wird:
ausgeführt wird:
   - Verarbeiten der von einer Eingabeeinheit, von einer Erfassungseinheit und von einer Messeinheit erhaltenen Informationen, wobei die von der Eingabeeinheit erhaltenen Informationen verkehrssituationsbezogene Kriterien und verkehrssituationsbezogene Schwellenwerte, die von der Erfassungseinheit erhaltenen Informationen die Erfassung von Objekten im Umfeld des Fahrzeuges, und die von der Messeinheit erhaltenen Informationen die Bestimmung des Bewegungszustandes des Fahrzeuges betreffen,
   - Erzeugen von Steuerungssignalen zur Ansteuerung von den Bewegungszustand des Fahrzeuges betreffenden Baueinheiten.

Sowohl das erfindungsgemäße Verfahren als auch das erfindungsgemäße Computerprogramm können unter Verwendung der erfindungsgemäßen Vorrichtung und allen in den Unteransprüchen beschriebenen Weiterbildungen angewendet bzw. benutzt werden.

Die vorliegende Erfindung wird beispielhaft anhand der nachfolgenden Zeichnungen näher erläutert. Es zeigen
- Fig. 1: ein Blockschaltbild eines prinzipiellen Aufbaus der erfindungsgemäßen Vorrichtung,
- Fig. 2: eine schematische Darstellung einer vorteilhaften Anordnung der erfindungsgemäßen Vorrichtung,
- Fig. 3: eine schematische Darstellung einer möglichen Verkehrssituation und deren Erfassung mittels der erfindungsgemäßen Vorrichtung,
- Fig. 4: ein Ablaufdiagramm eines vorteilhaften Algorithmus des erfindungsgemäßen Verfahrens bzw. des Computerprogramms,
- Fig. 5: ein weiteres Ablaufdiagramm eines weiteren vorteilhaften Algorithmus des erfindungsgemäßen Verfahrens bzw. des Computerprogramms.

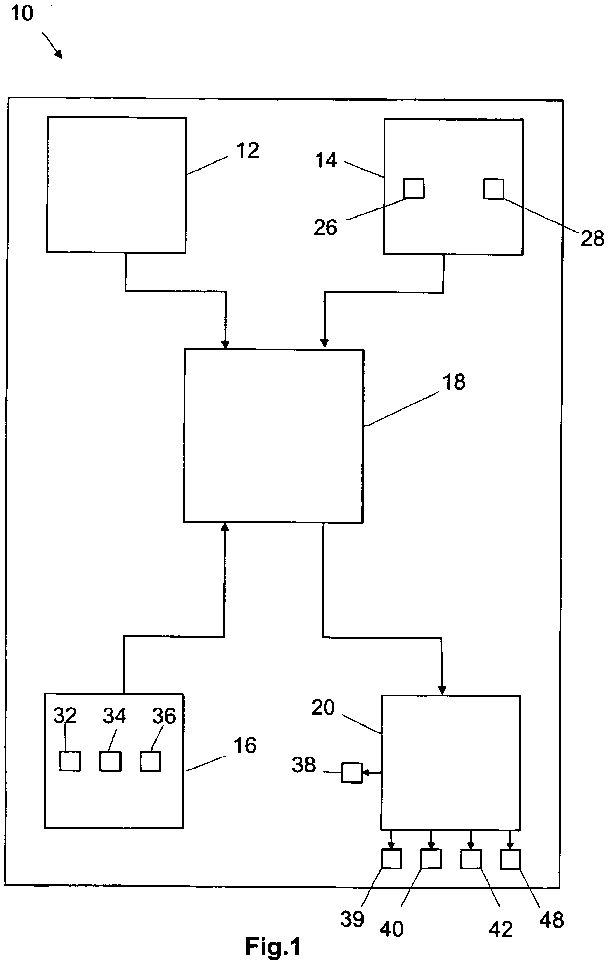

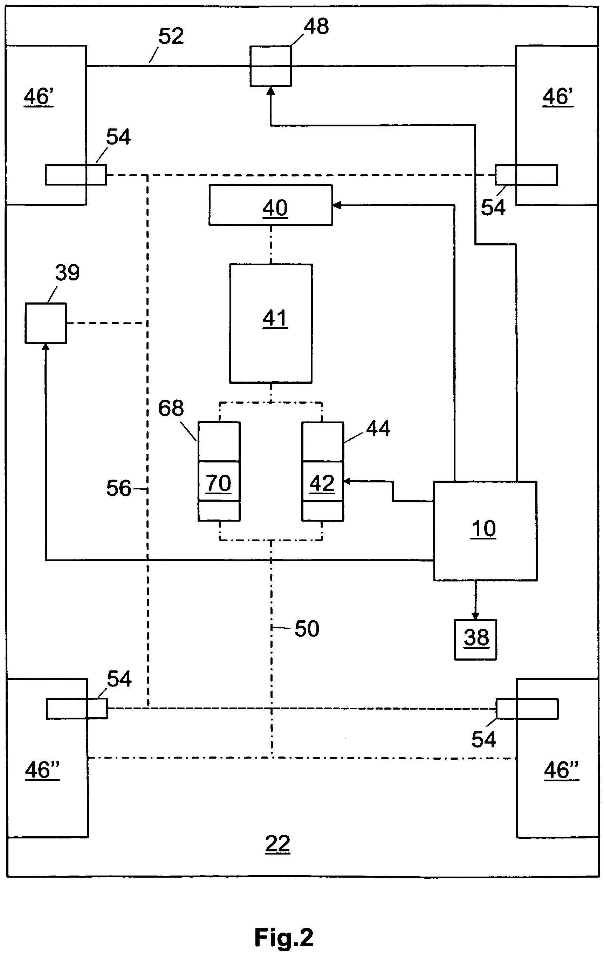

In Fig. 1 sind die wesentlichen Elemente einer erfindungsgemäßen Vorrichtung 10 zur Kollisionsvermeidung oder zur Verminderung der Kollisionsschwere infolge einer Kollision dargestellt. Zum besseren Verständnis denkbarer Interaktionen der Vorrichtung 10 mit den Bewegungszustand eines Fahrzeuges 22 betreffenden Bauteilen sei an dieser Stelle auch auf Fig. 2 verwiesen.

Die erfindungsgemäße Vorrichtung 10 umfasst eine Eingabeeinheit 12, eine Erfassungseinheit 14, eine Messeinheit 16, eine Steuereinheit 18 und eine Ausgabeeinheit 20.

Die Eingabeeinheit 12 dient zur Eingabe von verkehrssituationsbezogenen Kriterien und zur Ermittlung von verkehrssituationsbezogenen Schwellenwerten. Eine Eingabeeinheit 12 kann beispielsweise in Form eines Diagnose-PCs ausgebildet sein. Ein verkehrssituationsbezogenes Kriterium kann beispielsweise eine erwartete Fahrerreaktionszeit sein. Aus den eingegebenen verkehrssituationsbezogenen Kriterien werden anschließend verkehrssituationsbezogene Schwellenwerte ermittelt. Weiterhin kann über die Eingabeeinheit 12 ausgewählt werden, welche der in Frage kommenden, den Bewegungszustand des Fahrzeuges betreffenden Baueinheiten durch die erfindungsgemäße Vorrichtung 10 angesteuert werden sollen.

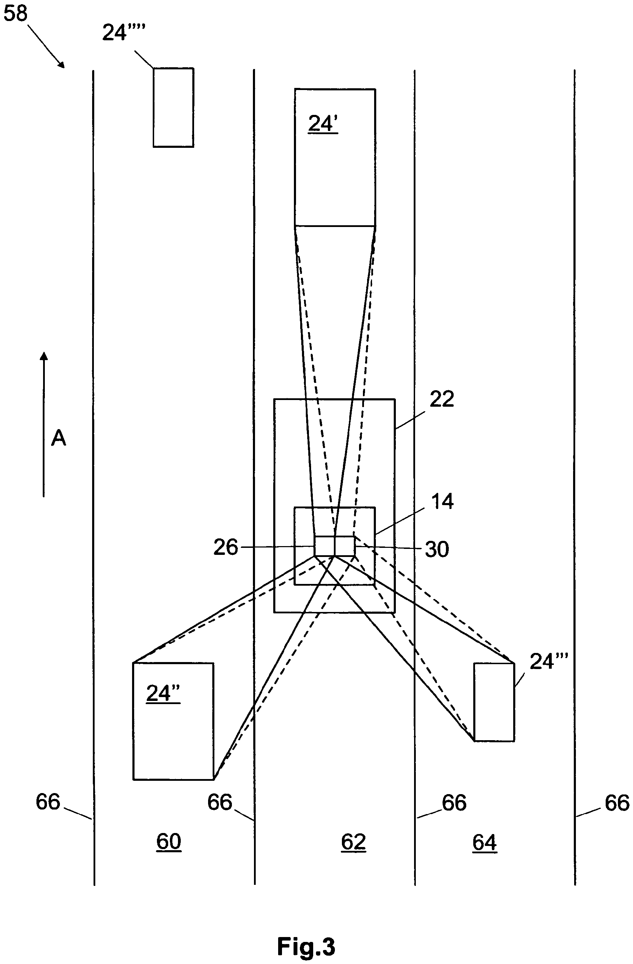

Weiterhin umfasst die erfindungsgemäße Vorrichtung 10 die Erfassungseinheit 14 zur Erfassung von Objekten 24 im Umfeld des Fahrzeuges 22 (siehe Fig. 3). Die Objekte 24 umfassen dabei alle Objekte, die einen Einfluss auf die aktuelle Verkehrssituation haben, insbesondere Fahrzeuge, Fußgänger, Motorrad- und Radfahrer, Leitplanken, Pfeiler oder Straßenteiler. Im folgenden sollen unter den Objekten 24 Fahrzeuge im Umfeld des eigenen Fahrzeuges 22 verstanden werden. Die Erfassungseinheit 14 weist ein Videosystem 26 und ein objektvermessendes System 28, beispielsweise ein Lasersystem 30, auf. Mit diesen Komponenten können Abstand, Relativgeschwindigkeit, Breite, laterale Ablage und Art der Objekte 24 im Umfeld des eigenen Fahrzeuges 22 bestimmt werden. Das Videosystem 26, welches aus einer oder mehreren Videokameras besteht, ist bereits aus LDW-Systemen bekannt, in denen die Fahrspur beispielsweise durch Kontrastsprünge, wie sie etwa durch den Fahrbahnrand, Fahrbahnmarkierungen oder Leitplanken hervorgerufen werden, bestimmt werden kann. Weiterhin ist das LDW-System in der Lage, die Position des eigenen Fahrzeuges 22 ins Verhältnis zur Fahrspur zu setzen und eine Warnung ausgegeben, wenn das Fahrzeug 22 die Fahrspur verlässt. Da sich der Kontrast je nach Tageszeit und Witterung verschlechtern kann (z.B. nachts oder bei Nebel), werden sehr kontrastempfindliche Videokameras eingesetzt, die zudem auch nachtsichttauglich sein können.

Die Messeinheit 16 dient zur Bestimmung des Bewegungszustandes des Fahrzeuges 22. Die Messeinheit 16 kann eine Geschwindigkeitsmesseinheit 32 zur Ermittlung der Fahrzeuggeschwindigkeit umfassen, wobei alle Vorrichtungen in Betracht kommen, die zur Bestimmung der Fahrzeuggeschwindigkeit geeignet sind. Zweckmäßigerweise sollte jedoch die Fahrzeuggeschwindigkeit in elektronisch verarbeitbarer Form bereitgestellt werden. Die Bestimmung der eigenen Fahrzeuggeschwindigkeit ist von hoher Bedeutung, da zum einen nur bei ihrer Kenntnis die Geschwindigkeit der sich im Umfeld des eigenen Fahrzeuges 22 befindlichen Objekte 24 bestimmt werden kann, und zum anderen, weil die eigene Geschwindigkeit einen erheblichen Einfluss auf den Brems- oder Ausweichweg und damit auf die Möglichkeiten zur Kollisionsvermeidung hat. Weiterhin umfasst die Messeinheit 16 eine Einheit 34 zur Bestimmung der Gierrate. Die Gierrate bezeichnet dabei die Drehgeschwindigkeit des Fahrzeuges 22 um seine vertikale Achse. Darüber hinaus ist ein Sensor zur Messung der Querbeschleunigung 36 vorgesehen. Mit den Größen Fahrzeuggeschwindigkeit, Giergeschwindigkeit und Querbeschleunigung kann der Bewegungszustand des Fahrzeuges 22 so bestimmt werden, dass eine Aussage darüber getroffen werden kann, ob eine Bremsung oder ein Ausweichmanöver überhaupt möglich ist und nicht zu Instabilitäten des Fahrzeuges 22, etwa zum Schleudern oder zum Umkippen, führen würden. Diese Größen werden bereits von elektronischen Stabilitätsprogrammen ESP genutzt, um durch gezieltes Veranlassen einzelner Bremsen 54 (Fig.2) mit unterschiedlicher Intensität den Bewegungszustand des Fahrzeuges 22 im stabilen Bereich zu halten. Derartige Systeme sind heute in Nutzfahrzeugen verfügbar, so dass auch diesbezüglich keine zusätzliche Sensorik aufgebaut werden muss.

Die Steuereinheit 18 vergleicht verkehrssituationsbezogene Kennwerte, welche die Steuereinheit 18 aus charakteristischen Größen des Fahrzeugs 22 und des vorausfahrenden Fahrzeugs 24', wie etwa den Bewegungsgrößen, berechnet, mit den Schwellenwerten, die von der Eingabeeinheit 12 geliefert werden. Je nach Ergebnis dieses Vergleiches erzeugt die Steuereinheit 18 entsprechende Steuersignale. Dabei wird unterstellt, dass eine Kollision nur mit dem vorausfahrenden, sich in der Bewegungsrichtung des eigenen Fahrzeugs befindenden Fahrzeug 24' stattfinden kann und vermieden werden soll (vgl. Fig. 3). Die Ausgabeeinheit 20 der erfindungsgemäßen Vorrichtung 10 dient zur Ausgabe der von der Steuereinheit 18 erzeugten Steuersignale. Die Ausgabeeinheit 20 hat dabei einen oder mehrere Anschlüsse, an die den Bewegungszustand des Fahrzeuges 22 betreffende Baueinheiten anschließbar sind, um dann mittels der Steuersignale angesteuert werden zu können. Im dargestellten Beispiel ist dies u.a. eine im Cockpit des Fahrzeuges 22 angeordnete Anzeigevorrichtung 38 wie eine Warnlampe, die den Fahrer in optischer Form auf eine Gefahrensituation hinweisen kann (vgl. auch Fig. 2). Alternativ kann die Anzeigevorrichtung 38 auch ein oder mehrere akustische wirksame Bauteile (z.B. Lautsprecher) oder ein oder mehrere Vibrationselemente umfassen, die den Fahrer in akustischer oder haptischer Form auf eine Gefahrensituation hinweisen.

Im dargestellten Beispiel ist die Ausgabeeinheit 20 mit einem Bremssystem 39 verbunden, so dass die Steuereinheit 18 mit den von ihr erzeugten Steuersignalen direkt das Bremssystem 39 ansteuern kann (vgl. auch Fig. 2). Auf diese Weise kann ohne Eingreifen des Fahrers automatisch eine Bremsung veranlasst werden, wenn die Steuereinheit 18 zu einer entsprechenden Bewertung der aktuellen Verkehrssituation kommt. Das Bremssystem kann aber auch für eine Form der haptischen Warnung benutzt werden, indem die Steuereinheit 18 für einen kurzen Zeitraum von beispielsweise 1s einen Bremsruck anfordert.

Weiterhin ist eine Motorsteuerung 40 mit der Ausgabeeinheit 20 verbunden. Hat die Bewertung der aktuellen Verkehrssituation ergeben, dass zur Kollisionsvermeidung oder zur Verminderung der Kollisionsschwere infolge einer Kollision eine Bremsung erforderlich ist, so kann eine maximale Verzögerung nur dann erreicht werden, wenn ein Motor 41, mit dem das eigene Fahrzeug 22 angetrieben wird, kein Drehmoment mehr an Räder 46 abgibt. Die Motorsteuerung 40 wird in dem Fall, dass eine Bremsung durch die erfindungsgemäße Vorrichtung 10 veranlasst wird, entsprechend angesteuert und unterbindet die Drehmomentenabgabe des Motors 41, so dass die Bremsung mit maximaler Verzögerung durchgeführt werden kann. Dabei muss die Drehmomentenabgabe auch dann unterbrochen werden können, wenn gerade ein Drehmoment z.B. durch Treten des Gaspedals durch den Fahrer oder durch einen Tempomat angefordert wird.

Im dargestellten Beispiel ist die Ausgabeeinheit 20 mit einer Getriebesteuerung 42 mit einer Kupplung 70' verbunden (vgl. auch Fig. 2). In diesem Fall wird ein automatisiertes Getriebe 44 verwendet, über welches das Drehmoment an die Räder 46 übertragen wird. Die Kupplung 70' ist derart ausgestaltet, dass sie mit entsprechenden von der Steuereinheit 18 erzeugten Steuersignalen mit Hilfe der Getriebesteuerung 42 geöffnet werden kann, wodurch der Drehmomentenfluss vom Motor 41 zu den Rädern 46 des Fahrzeuges 22 unterbrochen wird. Auf diese Weise wird erreicht, dass bei geöffneter Kupplung 70' der Motor 41 aufgrund der durch die Bremsung erzwungenen niedrigen Motordrehzahlen nicht "abgewürgt" werden kann. Dies ist insbesondere deshalb von Bedeutung, weil der Fahrer die mit Motorkraft arbeitende Lenkkraftunterstützung verlieren oder es zu einem Blockieren der Antriebsräder kommen könnte. Weiterhin wird so der Fahrkomfort erhöht und eine weitgehend unterbrechungsfreie Fortsetzung der Fahrt nach Veranlassung einer autonomen Bremsung und vermiedener Kollision möglich gemacht.

Alternativ zum Getriebe 44 kann auch ein automatisches Getriebe 68 mit schlupfbehaftetem Drehmomentwandler 70 verwendet werden. In diesem Fall ist eine Auftrennung des Antriebsstrangs durch eine Kupplung nicht notwendig, da Unterschiede in Antriebs- und Abtriebsdrehzahlen durch Schlupf im Drehmomentenwandler 70 ausgeglichen werden. Die Ansteuerung einer Getriebesteuerung durch die Steuereinheit 18 kann in diesem Fall entfallen.

Darüber hinaus kann ein Lenksystem 48 mit der Ausgabeeinheit 20 verbunden sein. Das Lenksystem 48 ist in der Lage, Sollvorgaben für Lenkmomente oder -winkel autonom umzusetzen und damit der Steuereinheit 18 die Durchführung eines Ausweichmanövers zur Kollisionsvermeidung oder zur Verminderung der Kollisionsschwere infolge einer Kollision zu ermöglichen. Die von der Steuereinheit 18 erzeugten Steuersignale beinhalten in diesem Fall Informationen zum einen darüber, ob ein Ausweichmanöver zur Kollisionsvermeidung oder zur Verminderung der Kollisionsschwere infolge einer Kollision überhaupt beitragen kann, zum anderen, zu welcher Seite ausgewichen werden soll und welcher Lenkeinschlag hierzu ideal ist, um das Ausweichmanöver sicher ausführen zu können. Entsprechend diesen Informationen führt das Lenksystem 48 die Lenkeingriffe durch. Dabei muss das System so ausgestaltet sein, dass die Lenkbewegungen des Fahrers während des Ausweichmanövers überstimmt oder abgekoppelt werden, da diese in den meisten Fällen nicht den von der Steuereinheit 18 vorgegebenen Lenkbewegungen entsprechen. Zusätzlich zum oder anstelle des Lenkeinschlags kann ein Ausweichmanöver auch durch asymmetrisches Veranlassen der Bremsen 54 zur Erzeugung einer Drehbewegung des Fahrzeugs durchgeführt werden.

In Fig. 2 ist eine denkbare Anordnung der erfindungsgemäßen Vorrichtung 10 innerhalb eines Fahrzeuges 22 und möglicher, den Bewegungszustand des Fahrzeuges 22 betreffender Baueinheiten, die mittels der Vorrichtung 10 ansteuerbar sind, schematisch dargestellt. Das Fahrzeug 22 umfasst die Räder 46, wobei im dargestellten Beispiel die Hinterräder 46" mittels des Motors 41 und entweder über das automatisierte Getriebe 44 mit der Kupplung 70' oder das automatische Getriebe 68 mit dem Drehmomentwandler 70 angetrieben werden. Das Drehmoment wird über Antriebsstrang 50 an die Hinterräder 46" geleitet, wobei aber auch ein Allradantrieb denkbar ist. Mit einer Lenkung 52 wird das Fahrzeug 22 über die Vorderräder 46' gelenkt. Die Räder 46 sind mit Bremsen 54 ausgestattet, um das Fahrzeug 22 verzögern zu können, wobei diese über Leitungen 56 mit dem Bremssystem 39 verbunden sind. Die Leitungen 56 können sowohl pneumatischer als auch elektrischer Art sein, wobei das Bremssystem 39 in der Lage ist, jede Bremse 54 einzeln und mit unterschiedlicher Intensität anzusteuern. Wie oben bereits dargelegt, ist die Vorrichtung 10 mit der Anzeigevorrichtung 38, dem Bremssystem 39, dem Lenksystem 48 und der Getriebesteuerung 42 verbunden, so dass entsprechend der von der Vorrichtung 10 ermittelten Bewertung der Verkehrssituation in oben erklärter Weise auf den Bewegungszustand des Fahrzeuges 22 unabhängig vom Fahrer Einfluss genommen werden kann.

In Fig. 3 ist eine typische Verkehrssituation auf einer mehrspurigen Richtungsfahrbahn 58 dargestellt, die drei Spuren umfasst, eine linke 60, eine mittlere 62 und eine rechte Spur 64. Auf der Spur 62 befindet sich ein Objekt 24', auf der linken Spur 60 ein Objekt 24" und ein Objekt 24"" sowie auf der rechten Spur 64 ein Objekt 24"'. Bei den Objekten 24 soll es sich im dargestellten Beispiel ausnahmslos um Fahrzeuge handeln. Das eigene Fahrzeug 22 befindet sich auf der mittleren Spur 62. Alle Fahrzeuge 22 und 24 bewegen sich in Richtung des Pfeils A. Mit Hilfe der Erfassungseinheit 14 werden die innerhalb der Reichweite des Videosystems 26 und des Lasersystems 30 befindlichen Objekte 24 durch diese erfasst. In Fig. 3 sind die objektbezogenen Erfassungssektoren des Videosystems 26 als durchgezogene, die des Lasersystems 30 als gestrichelte Linien dargestellt. Im dargestellten Beispiel befinden sich alle Fahrzeuge 24 innerhalb der Reichweite der Erfassungseinheit 14. Fahrzeuge, die sich außerhalb der Reichweite befinden, werden nicht erfasst und nicht in den Berechnungen der verkehrssituationsbezogenen Kennwerte berücksichtigt. Die Reichweite und der Sektor, innerhalb derer die Objekte 24 erfasst werden können, lassen sich individuell einstellen. Es können mehrere Lasersensoren so ausgerichtet werden, dass Objekte innerhalb ihrer Reichweite unabhängig von ihrer winkligen Lage zum Fahrzeug 22 erfasst werden können. Es kann auch ausreichend sein, die Objekterfassung auf einen bestimmten Sektor zu beschränken. Objekte, welche sich auf der eigenen Spur direkt hinter dem eigenen Fahrzeug 22 befinden, spielen für die Kollisionsvermeidung eine untergeordnete Rolle, so dass es vertretbar ist, diese zu ignorieren.

Die aus den LDW-Systemen bekannten Videosysteme 26 überwachen den vor dem Fahrzeug 22 liegenden Sektor, wobei dieser je nach eingesetzter Optik der Videokamera größer oder kleiner sein kann. Im allgemeinen reicht bei LDW-Systemen die Verwendung einer Videokamera aus. Um eine Vergrößerung des erfassbaren Sektors zu erreichen, können mehrere Videokameras eingesetzt werden, so dass die Sektoren, die vom Lasersystem 30 und vom Videosystem 26 erfasst werden, deckungsgleich sind.

Die aus den LDW-Systemen bekannten Videosysteme 26 nutzen unter anderem Kontrastsprünge, die von den Fahrbahnmarkierungen 66 oder Straßenrändern erzeugt werden, zur Bestimmung der Fahrspur. Auch die Erfassung der Objekte 24 mittels des Videosystems 26 gemäß der Erfindung nutzt unter anderem diese Art der Bildverarbeitung. Es können darüber hinaus aber auch andere Verfahren zum Einsatz kommen wie etwa die Ermittlung des optischen Flusses. Diese Verarbeitungsschritte dienen unter anderem der Bestimmung von Abstand, Breite, lateraler Ablage und Art der Objekte 24. Der Aufbau einer zusätzlichen Umfeldsensorik ist damit nicht notwendig.

Die vom Videosystem 26 als auch vom Lasersystem 30 gelieferten Daten werden der Steuereinheit 18 zugeführt. Die Lage der erfassten Objekte 24 kann so bestimmt werden, dass eine Zuordnung zu einer der Spuren 60, 62, 64 bzw. zum eigenen Bewegungspfad, der nicht mit einer Spur identisch sein muss, möglich ist. Dadurch, dass die Objekte 24 sowohl vom Videosystem 26 als auch vom Lasersystem 30 detektiert werden, wird eine Redundanz erzeugt, die zu einer zuverlässigeren und genaueren Bestimmung der Lage- und Bewegungsgrößen sowie der Abmessungen führt.

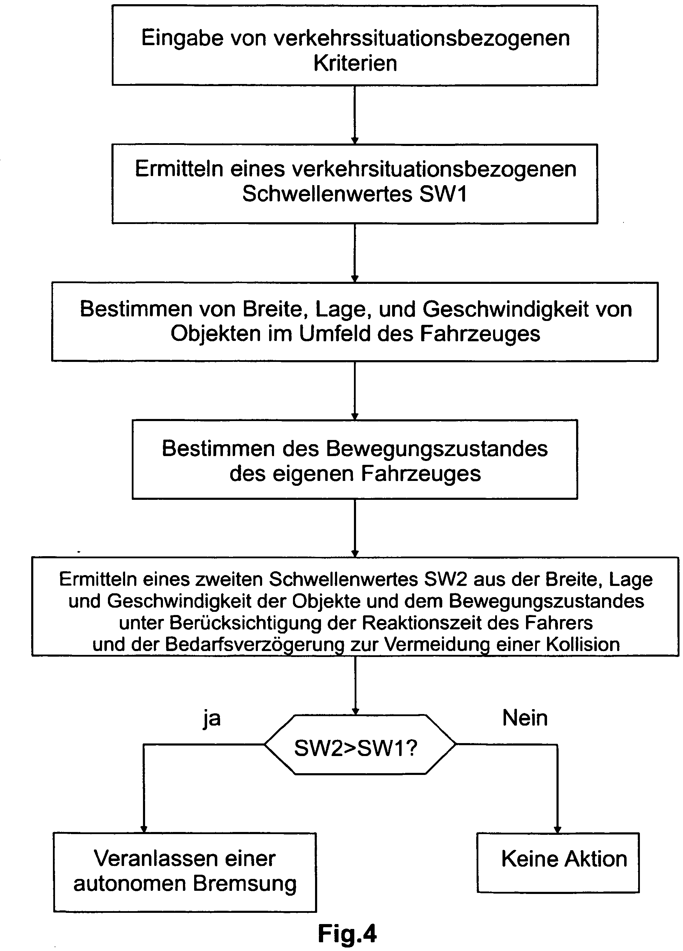

In Fig. 4 ist ein Ablaufdiagramm des erfindungsgemäßen Verfahrens bzw. des Computerprogramms dargestellt, wobei hier ausschließlich auf die Veranlassung einer autonomen Bremsung zur Kollisionsvermeidung abgestellt wird, ohne dass ein aktiver Lenkeingriff vorgenommen wird. Der erste Schritt des erfindungsgemäßen Verfahrens besteht in der Ermittlung eines verkehrssituationsbezogenen Schwellenwertes. Dieser Wert wird auf Grundlage von Angaben, die über die Eingabeeinheit 12 getätigt wurden, ermittelt und kann individuelle Gewohnheiten des Fahrers berücksichtigen. Weiterhin kann der Schwellenwert berücksichtigen, wie stark das Fahrzeug 22 beladen ist, und ob ein Anhänger mit welcher Beladung mitgeführt wird. Weiterhin können auf Straßen- und Witterungszustand bezogene Informationen, wie etwa die Außentemperatur, in die Ermittlung des Schwellenwertes einfließen. Da sich die letztgenannten Größen während der Fahrt oder zwischen mehreren Fahrten (z.B. durch Be-/Entladung) ändern können, müssen diese Werte automatisch angepasst werdenso dass der Schwellenwert in regelmäßigen Abständen aktualisiert wird.

Anschließend beginnt die Ermittlung eines verkehrssituationsbezogenen Kennwertes mit Hilfe der Steuereinheit 18. Hier werden die bereits für die Ermittlung des Schwellenwertes ermittelten Informationen insbesondere auch bezüglich Beladung, der Mitführung eines Anhängers, Straßen- und Witterungszustand berücksichtigt. Zusätzlich gehen die Informationen über den Bewegungszustand des eigenen Fahrzeuges 22 und die durch die Erfassungseinheit 14 gelieferten Daten bezüglich Abstand, Relativgeschwindigkeit, lateraler Ablage, Breite und Art der erfassten Objekte 24 im Umfeld des Fahrzeuges 22 in die Ermittlung des Kennwertes ein. Es wird eine zur Vermeidung der Kollision benötigte Bedarfsverzögerung unter Berücksichtigung der Reaktionszeit des Fahrers ermittelt und die Durchführbarkeit eines Ausweichmanövers abgeschätzt. Auch diese Informationen gehen in die Ermittlung des Kennwertes ein, der ständig aktualisiert wird, so dass die aktuelle Verkehrssituation, der Bewegungszustand sowie der Straßen- und Witterungszustand immer korrekt berücksichtigt werden.

Der Kennwert und der Schwellenwert haben dasselbe Format, so dass die Steuereinheit 18 sie miteinander vergleichen kann. Die Steuereinheit 18 führt einen ständigen Vergleich zwischen dem Kenn- und dem Schwellenwert durch. Für den Fall, dass der Kennwert den Schwellenwert nicht überschreitet, wird keine Aktion veranlasst. Ist der Kennwert allerdings größer als der Schwellenwert, veranlasst die Steuereinheit 18 eine Aktion, in diesem Beispiel die Vornahme einer autonomen Bremsung.

Mit Bezug auf Fig. 3 soll dies näher erklärt werden. Dabei wird unterstellt, dass die sich auf der linken Spur 60 befindlichen Fahrzeuge 24" und 24"" eine höhere Geschwindigkeit und das sich auf der rechten Spur 64 befindliche Fahrzeug 24'" eine niedrigere Geschwindigkeit als das eigene Fahrzeug 22 aufweist. Weiter soll angenommen werden, dass das vorausfahrende Fahrzeug 24' plötzlich verzögert. Die erfindungsgemäße Vorrichtung registriert, dass sich der Abstand zwischen dem eigenen Fahrzeug 22 und dem vorausfahrenden Fahrzeug 24' aufgrund der Verzögerung verringert. Als Folge davon steigt die Krititzität der Verkehrssituation, also die Wahrscheinlichkeit einer Kollision an, was durch einen steigenden Kennwert repräsentiert wird. Allerdings erkennt die Vorrichtung, dass eine Ausweichmöglichkeit besteht, indem der Fahrer des eigenen Fahrzeuges auf die rechte Spur 64 ausweicht. Ist noch ausreichend Zeit, um ein entsprechendes Ausweichmanöver einzuleiten, steigt der Kennwert zwar an, überschreitet aber den Sollwert nicht. Die Vorrichtung veranlasst folglich keine Bremsung. Führt der Fahrer ein entsprechendes Ausweichmanöver aus und wechselt auf die rechte Spur 64, sinkt der Kennwert ab, da sich dann vor dem Fahrzeug 22 kein Fahrzeug befindet. Für den Fall, dass der Fahrer kein Ausweichmanöver unternimmt und keine oder keine ausreichend starke Bremsung veranlasst, verringert sich der Abstand zum vorausfahrenden Fahrzeug 24' weiter, so dass ab einem gewissen Zeitpunkt keine Zeit mehr bleibt, ein Ausweichmanöver durchzuführen. Eine Kollision lässt sich dann nur noch mit einer Bremsung vermeiden. Ab diesem Zeitpunkt überschreitet der Kennwert den Schwellenwert und die Vorrichtung veranlasst eine autonome Bremsung oder verstärkt den Bremseingriff, um eine Kollision zu vermeiden.

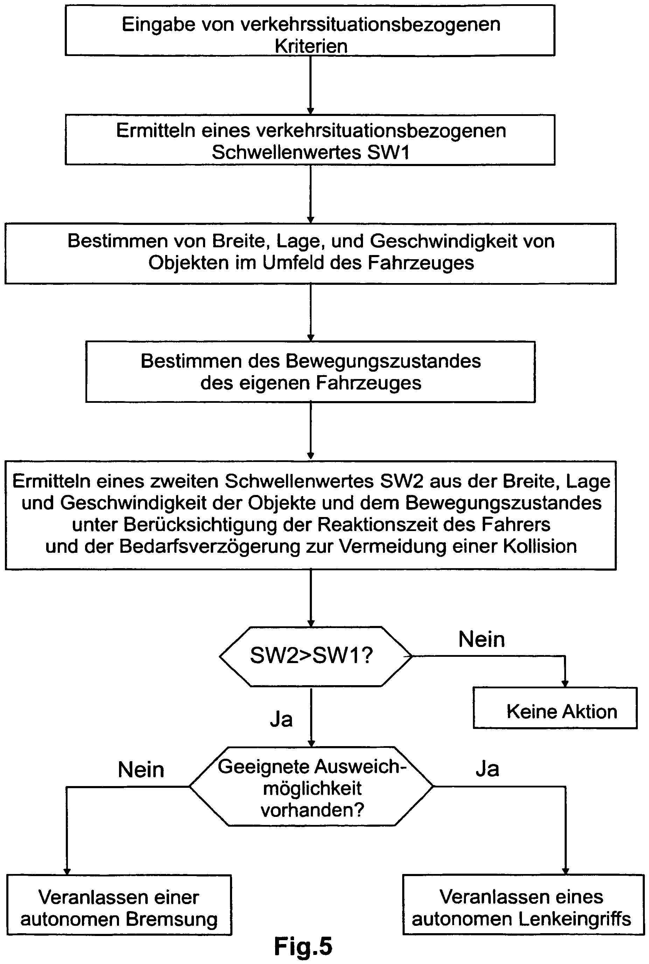

In Fig. 5 ist ein Ablaufdiagramm des erfindungsgemäßen Verfahrens bzw. des Computerprogramms dargestellt, wobei hier ein aktiver Lenkeingriff vorgenommen werden kann. Im Gegensatz zu dem in Fig. 4 dargestellten Ablaufdiagramm werden hier ein erster und ein zweiter Schwellenwert ermittelt. Die Eingabe und die Ermittlung des ersten Schwellenwertes erfolgt analog zum in Fig. 4 dargestellten Fall. Ausgehend vom ersten Schwellenwert beinhaltet der zweite Schwellenwert zusätzlich noch Informationen darüber, ob ein Fluchtraum zur Vermeidung der Kollision vorhanden ist oder nicht. Diese Information steht der Steuereinheit 18 unabhängig von den Schwellen- und Kennwerten separat zur Verfügung, um eine Abfrage über das Vorhandensein eines Fluchtraums durchzuführen. Für die Ermittlung des zweiten Schwellenwertes wird nicht nur die aktuelle Verkehrssituation berücksichtigt, das heißt, ob momentan ein Spurwechsel möglich ist oder nicht, sondern auch, wie sich ein Spurwechsel auf die zukünftige Verkehrssituation auswirkt. So kann beurteilt werden, ob ein mögliches Ausweichmanöver wirklich zur Vermeidung einer Kollision beiträgt oder nicht. Es soll vermieden werden, dass zur Vermeidung einer Kollision auf der eigenen Fahrspur ein Ausweichmanöver durchgeführt wird, wodurch eine Kollision mit einem Objekt auf der benachbarten Fahrspur verursacht wird. Insbesondere sollen Ausweichmanöver verhindert werden, die zu Kollisionen mit Fußgängern oder Motorrad- oder Radfahrern führen würden oder ungeeignete Spuren verwenden, beispielsweise Radwege oder Bürgersteige. Nur wenn tatsächlich ein Fluchtraum zur Vermeidung einer Kollision vorhanden ist, wird ein Lenkeingriff vorgenommen. Gemäß des Ablaufdiagramms nach Fig. 5 wird ein Lenkeingriff erst dann ausgelöst, wenn sowohl der erste als auch der zweite Schwellenwert vom Kennwert überschritten werden, wobei der zweite Schwellenwert gleich oder größer als der erste Schwellenwert ist. Diese Festlegung ist jedoch nicht zwingend, andere Bedingungen für die Veranlassung eines Lenkeingriffs sind denkbar. Ein wesentlicher Aspekt hierbei ist, ob man bestrebt ist, eher eine Bremsung oder einen Lenkeingriff auszulösen.

Für den Fall, dass keine Ausweichmöglichkeit vorhanden ist, wird, wie im obigen Beispiel bereits dargelegt, eine autonome Bremsung veranlasst, aber kein Lenkeingriff vorgenommen. Je nach Verkehrssituation kann es nötig sein, neben dem Lenkeingriff zusätzlich noch eine Bremsung zu veranlassen. Dies könnte dann der Fall sein, wenn das Ausweichmanöver bei unveränderter Geschwindigkeit nicht mehr so rechtzeitig durchgeführt werden kann, um eine Kollision zu verhindern.

Wiederum in Bezug auf die in Fig. 3 dargestellte Verkehrssituation soll nun das Verhalten der Vorrichtung 10 mit der Option eines Lenkeingriffs erklärt werden. Die Voraussetzungen sollen dieselben sein wie oben dargelegt. Durch die Verzögerung des Fahrzeuges 24' steigt der Kennwert an. Überschreitet der Kennwert den ersten Schwellenwert und wäre keine geeignete Ausweichmöglichkeit vorhanden, veranlasst die Steuereinheit 18 eine autonome Bremsung. Allerdings erkennt die Vorrichtung, dass eine Ausweichmöglichkeit sowohl auf die linke Spur 60 als auch auf die rechte Spur 64 besteht. Es wird daher zunächst keine Aktion ausgelöst, obwohl der erste Sollwert überschritten ist. Die Vorrichtung registriert, dass ein Ausweichen auf die linke Spur 60 zu einer Kollision mit dem Fahrzeug 24" führen könnte, da dieses mit einer höheren Geschwindigkeit als das eigene Fahrzeug 22 fährt. Die Spur 60 kann also nicht als Fluchtraum genutzt werden, sodass die Vorrichtung einen Spurwechsel auf die Spur 60 ausschließt und sich auf einen Wechsel auf die Spur 64 vorbereitet, die einen Fluchtraum darstellt, da das Fahrzeug 24'" langsamer fährt als das eigene Fahrzeug 22. Übersteigt nun der Kennwert aufgrund der weiter anhaltenden Verzögerung des Fahrzeuges 24' den zweiten Schwellenwert, leitet die Vorrichtung durch einen autonomen Lenkeingriff ein Ausweichmanöver auf die Spur 64 ein. Sollte der Kennwert trotz des Ausweichmanövers nicht abschwellen, etwa dadurch, dass 24' noch stärker verzögert oder sich infolge einer Instabilität dreht, so dass mit dem Ausweichmanöver allein eine Kollision nicht verhindert werden kann, kann die Vorrichtung zusätzlich zum Lenkeingriff eine Bremsung veranlassen.

Im dargestellten Beispiel wird in dem Fall keine Aktion veranlasst, wenn zwar bei Vorhandensein einer geeigneten Ausweichmöglichkeit der Kennwert den ersten Schwellenwert überschreitet, nicht aber den zweiten. Da die Verkehrssituation allerdings bereits eine gewisse Krititzität erreicht hat, kann die Steuereinheit in diesem Fall auch so eingerichtet sein, eine autonome Bremsung zu veranlassen.

Mit der hier dargestellten Vorrichtung bzw. dem Verfahren und dem Computerprogramm wird die Möglichkeit geschaffen, Kollisionen zu vermeiden oder die Kollisionsschwere zu vermindern. Die Erfindung ist nicht auf die hier dargestellten Beispiele beschränkt. Der beanspruchte Schutzbereich umfasst auch alle möglichen Variationen und Abwandlungen, die sich aus dem Grundgedanken ergeben, welcher der vorliegenden Erfindung zugrunde liegt. So können zur Bestimmung von Abstand, Breite, Lage, Relativgeschwindigkeit und Art von Objekten in der eigenen Bewegungsrichtung auch andere als die vorgestellten Messverfahren verwendet oder zusätzlich zu den vorgestellten eingesetzt werden. Denkbar wäre dabei, das Umfeld des Fahrzeuges mittels Satellitennavigation zu erfassen. Für den Fall, dass Anhänger mitgeführt werden, können sich die Laser- und die Videosysteme auch auf den Anhänger erstrecken.

Derartige Variationen und Abwandlungen gehen nicht über den Grundgedanken der vorliegenden Erfindung hinaus.

## Patentansprüche

1. Vorrichtung zur Kollisionsvermeidung oder zur Verminderung der Kollisionsschwere für Fahrzeuge (22), insbesondere Nutzfahrzeuge, umfassend
- eine Eingabeeinheit (12) zur Eingabe von verkehrssituationsbezogenen Kriterien und zur Ermittlung von verkehrssituationsbezogenen Schwellenwerten,
- eine Erfassungseinheit (14) zur Erfassung von Objekten (24) im Umfeld des Fahrzeuges (22),
- eine Messeinheit (16) zur Bestimmung des Bewegungszustandes des eigenen Fahrzeuges (22),
- eine Steuereinheit (18) zur Verarbeitung der von der Eingabeeinheit (12), der Erfassungseinheit (14) und der Messeinheit (16) erhaltenen Informationen und zur Erzeugung von Steuerungssignalen zur Ansteuerung von den Bewegungszustand des Fahrzeuges (22) betreffenden Baueinheiten, und
- eine Ausgabeeinheit (20) zur Ausgabe der erzeugten Steuerungssignale,
- ein Bremssystem (39) zur Betätigung von Bremsen (54),
wobei die Erfassungseinheit (14) ein oder mehrere objektvermessende Systeme (28) und ein oder mehrere bildverarbeitende Videosysteme (26) zur Bestimmung von Abstand, Breite, Relativgeschwindigkeit, lateraler Ablage und Art der Objekte (24) im Umfeld des Fahrzeuges (22) aufweist, **gekennzeichnet durch**
ein automatisiertes Getriebe (44) zur Öffnung einer Kupplung (42) und zur Unterbrechung des Drehmomentenflusses bei Betätigung der Bremsen (54), wobei jede Bremse (54) einzeln und mit unterschiedlicher Intensität betätigbar ist.

2. Vorrichtung nach Anspruch 1,
**dadurch gekennzeichnet, dass** die objektvermessenden Systeme (28) ein Lasersystem (30) umfassen.

3. Vorrichtung nach Anspruch 2,
**dadurch gekennzeichnet, dass** das Lasersystem (30) und das Videosystem (26) multidirektional einsetzbar sind.

4. Vorrichtung nach einem der vorherigen Ansprüche,
**gekennzeichnet durch** eine Anzeigevorrichtung (38) zur Ausgabe einer Warnung.

5. Vorrichtung nach einem der vorherigen Ansprüche,
**dadurch gekennzeichnet, dass** eines der bildverarbeiteriden Videosysteme (26) die Spurkamera eines LDW-Systems aufweist.

6. Vorrichtung nach Anspruch 1,
**gekennzeichnet durch** eine Motorsteuerung (40) zur Steuerung der Drehmomentenabgabe eines Motors (41).

7. Vorrichtung nach Anspruch 6,
**gekennzeichnet durch** ein automatisches Getriebe (68) mit einem Drehmomentenwandler (70) zur Wandlung des Drehmomentenflusses.

8. Vorrichtung nach einem der vorherigen Ansprüche,
**gekennzeichnet durch** ein Lenksystem (48) zur Betätigung einer Lenkung (52).

9. Verfahren zur Kollisionsvermeidung oder zur Verminderung der Kollisionsschwere infolge einer Kollision für Fahrzeuge (22), insbesondere Nutzfahrzeuge, umfassend folgende Schritte:
- Eingeben von verkehrssituationsbezogenen Kriterien und Ermitteln mindestens eines verkehrssituationsbezogenen Schwellenwertes mittels einer Eingabeeinheit (12),
- Bestimmen von Abstand, Breite, Relativgeschwindigkeit, lateraler Ablage und Art der Objekte (24) im Umfeld des Fahrzeuges (22) mittels einer Erfassungseinheit (14),
- Bestimmen des Bewegungszustandes des eigenen Fahrzeuges (22) mittels einer Messeinheit (16),
- Verarbeiten der von der Eingabeeinheit (12), der Erfassungseinheit (14) und der Messeinheit (16) erhaltenen Daten mittels einer Steuereinheit (18) zu einem verkehrssituationsbezogenem Kennwert,
Erzeugen von Steuerungssignalen zur Ansteuerung von den Bewegungszustand des Fahrzeuges (22) betreffenden Baueinheiten mittels der Steuereinheit (18), falls der Kennwert den Schwellenwert überschreitet,
- Ausgeben der erzeugten Steuerungssignale mittels der Ausgabeeinheit (20) an
Elemente (39, 40, 42, 48) zur Beeinflussung der Bewegung des Fahrzeugs (22),
sowie an eine Anzeigevorrichtung (38),
wobei die Steuerungssignale zur Ansteuerung eines Bremssystems (39) zur Betätigung von Bremsen (54) verwendbar sind, wobei jede Bremse (54) einzeln und mit unterschiedlicher Intensität betätigt werden kann, und
wobei die Steuerungssignale in einem automatisierten Getriebe (44) zur Öffnung einer Kupplung (42) und zur Unterbrechung des Drehmomentenflusses bei Betätigen der Bremsen (54) verwendbar sind.

10. Verfahren nach Anspruch 9,
**dadurch gekennzeichnet, dass** die Steuerungssignale zur Ausgabe einer Warnung mittels einer Anzeigevorrichtung (38) verwendbar sind.

11. Verfahren nach Anspruch 10,
**dadurch gekennzeichnet, dass** die Warnung optisch und/oder akustisch und/oder haptisch ausgebbar ist.

12. Verfahren nach einem der Ansprüche 9 bis 11,
**dadurch gekennzeichnet, dass** die Steuerungssignale in einer Motorsteuerung (40) zur Steuerung der Drehmomentenabgabe eines Motors (41) verwendbar sind.

13. Verfahren nach einem der Ansprüche 9 bis 12,
**dadurch gekennzeichnet, dass** die Steuerungssignale zur Ansteuerung eines Lenksystems (48) zur Betätigung einer Lenkung (52) verwendbar sind.

14. Verfahren nach Anspruch 13,
**dadurch gekennzeichnet, dass** die Steuerungssignale Informationen über den aktuellen Zustand von Fluchträumen zur Vermeidung einer Kollision umfassen.

15. Computerprogramm zur Kollisionsvermeidung oder zur Verminderung der Kollisionsschwere infolge einer Kollision für Fahrzeuge (22), insbesondere Nutzfahrzeuge (22), mit Programmmitteln zum Veranlassen eines Computers, die folgenden Schritte auszuführen, wenn das Computerprogramm auf dem Computer ausgeführt wird:
- Verarbeiten der von einer Eingabeeinheit (12), von einer Erfassungseinheit (14) und von einer Messeinheit (16) erhaltenen Informationen, wobei die von der Eingabeeinheit (12) erhaltenen Informationen verkehrssituationsbezogene Kriterien und verkehrssituationsbezogene Schwellenwerte, die von der Erfassungseinheit (14) erhaltenen Informationen die Erfassung von Objekten (24) im Umfeld des Fahrzeuges (22), und die von der Messeinheit (16) erhaltenen Informationen die Bestimmung des Bewegungszustandes des eigenen Fahrzeuges (22) betreffen,
- Erzeugen von Steuerungssignalen zur Ansteuerung von den Bewegungszustand des Fahrzeuges (22) betreffenden Baueinheiten,
wobei die Steuerungssignale zur Ansteuerung eines Bremssystems (39) zur Betätigung von Bremsen (54) verwendbar sind, und
wobei die Steuerungssignale in einem automatisierten Getriebe (44) zur Öffnung einer Kupplung (42) und zur Unterbrechung des Drehmomentenflusses bei Betätigen der Bremsen (54) verwendbar sind.

## Claims

1. Device for avoiding collisions or reducing the severity of collisions for vehicles (22), in particular utility vehicles, comprising
- an input unit (12) for inputting traffic-situation-related criteria and for determining traffic-situation-related threshold values,
- a sensing unit (14) for sensing objects (24) in the surroundings of the vehicle (22),
- a measuring unit (16) for determining the state of movement of the driver's own vehicle (22),
- a control unit (18) for processing the information obtained from the input unit (12), the sensing unit (14) and the measuring unit (16) and for generating control signals for actuating built-in units relating to the state of movement of the vehicle (22), and
- an output unit (20) for outputting the generated control signals,
- a brake system (39) for activating brakes (54),
wherein the sensing unit (14) has one or more object-measuring systems (28) and one or more image-processing video systems (26) for determining the distance, width, relative speed, lateral offset and type of the objects (24) in the surroundings of the vehicle (22), **characterized by**
an automated transmission (44) for opening a clutch (42) and for interrupting the torque flux when the brakes (54) are activated, wherein each brake (54) can be activated individually and with differing degrees of intensity.

2. Device according to Claim 1,
**characterized in that** the object-measuring systems (28) comprise a laser system (30).

3. Device according to Claim 2,
**characterized in that** the laser system (30) and the video system (26) can be used multi-directionally.

4. Device according to one of the preceding claims, **characterized by** a display device (38) for outputting a warning.

5. Device according to one of the preceding claims, **characterized in that** one of the image-processing video systems (26) has the lane camera of a lane departure warning system.

6. Device according to Claim 1,
**characterized by** an engine controller (40) for controlling the torque output of an engine (41).

7. Device according to Claim 6,
**characterized by** an automatic transmission (68) having a torque converter (70) for converting the torque flux.

8. Device according to one of the preceding claims, **characterized by** a steering system (48) for activating a steering means (52).

9. Method for avoiding collisions or for reducing the severity of collisions for vehicles (22), in particular utility vehicles, comprising the following steps:
- inputting of traffic-situation-related criteria and determination of at least one traffic-situation-related threshold value by means of an input unit (12),
- determination of the distance, width, relative speed, lateral offset and type of the object (24) in the surroundings of the vehicle (22) by means of a sensing unit (14),
- determination of the state of movement of the driver's own vehicle (22) by means of a measuring unit (16),
- processing of the data, obtained from the input unit (12), the sensing unit (14) and the measuring unit (16), by means of a control unit (18) to form a traffic-situation-related characteristic value,
- generation of control signals for actuating built-in units, relating to the state of movement of the vehicle (22), by means of the control unit (18) if the characteristic value exceeds the threshold value,
- outputting of the generated control signals by means of the output unit (20) to elements (39, 40, 42, 48) for influencing the movement of the vehicle (22), and to a display device (38),
wherein the control signals can be used to actuate a brake system (39) for activating brakes (54), wherein each brake (54) can be activated individually and with differing degrees of intensity, and
wherein the control signals can be used in an automated transmission (44) for opening a clutch (42) and for interrupting the torque flux when the brakes (54) are activated.

10. Method according to Claim 9,
**characterized in that** the control signals can be used to output a warning by means of a display device (38).

11. Method according to Claim 10,
**characterized in that** the warning can be output visually and/or acoustically and/or haptically.

12. Method according to one of Claims 9 to 11, **characterized in that** the control signals can be used in an engine controller (40) for controlling the torque output of an engine (41).

13. Method according to one of Claims 9 to 12, **characterized in that** the control signals can be used to actuate a steering system (48) for activating a steering means (52).

14. Method according to Claim 13,
**characterized in that** the control signals comprise information about the current state of avoidance spaces for avoiding a collision.

15. Computer program for avoiding collisions or for reducing the severity of collisions for vehicles (22), in particular utility vehicles (22), having programming means for causing a computer to execute the following steps when the computer program is executed on the computer:
- processing of the information obtained from an input unit (12), from a sensing unit (14) and from a measuring unit (16), wherein the information items obtained from the input unit (12) relate to traffic-situation-related criteria and traffic-situation-related threshold values, the information items obtained from the sensing unit (14) relate to the sensing of objects (24) in the surroundings of the vehicle (22), and the information items obtained by the measuring unit (16) relate to the determination of the state of movement of the driver's own vehicle (22),
- generation of control signals for actuating built-in units which relate to the state of movement of the vehicle (22),
wherein the control signal can be used for actuating a brake system (39) for activating brakes (54), and wherein the control signals can be used in an automated transmission (44) for opening a clutch (42) and for interrupting the torque flux when the brakes (54) are activated.

## Revendications

1. Dispositif destiné à éviter les collisions ou à éviter la gravité de collions pour des véhicules (22), en particulier des véhicules utilitaires, le dispositif comprenant :
- une unité d'introduction (12) qui permet d'introduire des critères concernant la situation du trafic et de déterminer des valeurs de seuil concernant la situation du trafic,
- une unité de détection (14) qui détecte des objets (24) présents dans l'environnement du véhicule (22),
- une unité de mesure (16) qui détermine l'état de déplacement du véhicule (22) concerné,
- une unité de commande (18) qui traite les informations obtenues sur l'unité d'introduction (12), par l'unité de détection (14) et par l'unité de mesure (16) et pour former des signaux de commande qui commandent les modules qui interviennent sur l'état de déplacement du véhicule (22) et
- une unité de sortie (20) qui délivre les signaux de commande ainsi formés,
- un système de freinage (39) qui actionne des freins (54),
l'unité de détection (14) présentant un ou plusieurs systèmes (28) de mesure d'objets et un ou plusieurs systèmes vidéo (26) de traitement d'images qui déterminent la distance, la largeur, la vitesse relative, le déport latéral et la nature des objets (24) présents dans l'environnement du véhicule (22), **caractérisé par**
une transmission automatique (44) qui ouvre un embrayage (42) et qui interrompt la chaîne de couple de rotation lorsque les freins (54) sont actionnés, chaque frein (54) pouvant être actionné séparément et à des intensités différentes.

2. Dispositif selon la revendication 1, **caractérisé en ce que** les systèmes (28) de mesure d'objets comprennent un système laser (30).

3. Dispositif selon la revendication 2, **caractérisé en ce que** le système laser (30) et le système vidéo (26) peuvent être utilisés multidirectionnellement.

4. Dispositif selon l'une des revendications précédentes, **caractérisé par** un dispositif d'affichage (38) qui délivre un avertissement.

5. Dispositif selon l'une des revendications précédentes, **caractérisé en ce que** l'un des systèmes vidéo (26) de traitements d'image présente une caméra de bande de circulation d'un système LDW.

6. Dispositif selon la revendication 1, **caractérisé par** une commande de moteur (40) qui commande le couple de rotation délivré par un moteur (41).

7. Dispositif selon la revendication 6, **caractérisé par** une transmission automatique (68) dotée d'un convertisseur (70) de couple de rotation qui convertit la chaîne de couple de rotation.

8. Dispositif selon l'une des revendications précédentes, **caractérisé par** un système de direction (48) qui actionne une direction (52).

9. Procédé destiné à éviter les collisions ou à diminuer la gravité de collision suite à une collision pour des véhicules (22), en particulier des véhicules utilitaires, le procédé comportant les étapes suivantes :
- au moyen d'une unité d'introduction (12), introduction de critères concernant la situation du trafic et détermination d'au moins une valeur de seuil concernant la situation du trafic,
- à l'aide d'une unité de détection (14), détermination de la distance, de la largeur, de la vitesse relative, du déport latéral et de la nature des objets (24) présents dans l'environnement du véhicule (22),
- au moyen d'une unité de mesure (16), détermination de l'état de déplacement du véhicule (22) concerné,
- au moyen d'une unité de commande (18), transformation des données obtenues sur l'unité d'introduction (12), par l'unité de détection (14) et par l'unité de mesure (16) en une valeur caractéristique concernant la situation du trafic,
- au cas où la valeur caractéristique dépasse la valeur de seuil, production au moyen de l'unité de commande (18) de signaux de commande destinés à commander des modules intervenant dans l'état de déplacement du véhicule (22),
- au moyen de l'unité de sortie (20), transmettre à des éléments (39, 40, 42, 48) permettant d'agir sur le déplacement du véhicule (22) ainsi qu'à une unité d'affichage (38) les signaux de commande produits,
les signaux de commande pouvant être utilisés pour commander un système de freinage (39) pour qu'il actionne des freins (54), chaque frein (54) pouvant être actionné séparément et à des intensités différentes et
les signaux de commande pouvant être utilisés dans une transmission automatique (44) pour ouvrir un embrayage (42) et interrompre la chaîne de couple de rotation lors de l'actionnement des freins (54).

10. Procédé selon la revendication 9, **caractérisé en ce que** les signaux de commande peuvent être utilisés pour délivrer un avertissement au moyen d'un dispositif d'affichage (38).

11. Procédé selon la revendication 10, **caractérisé en ce que** l'avertissement peut être délivré visuellement, acoustiquement et/ou tactilement.

12. Procédé selon l'une des revendications 9 à 11, **caractérisé en ce que** les signaux de commande peuvent être utilisés dans une commande de moteur (40) pour commander le couple de rotation délivré par un moteur (41).

13. Procédé selon l'une des revendications 9 à 12, **caractérisé en ce que** les signaux de commande peuvent être utilisés pour commander un système de direction (48) qui actionne une direction (52).

14. Procédé selon la revendication 13, **caractérisé en ce que** les signaux de commande contiennent des informations concernant l'état actuel des espaces de fuite qui permettent d'éviter une collision.

15. Programme informatique destiné à éviter les collisions ou à diminuer la gravité d'une collision en cas de collision de véhicules (22), en particulier pour des véhicules utilitaires (22), et doté de moyens de programme qui amènent un ordinateur à exécuter les étapes suivantes lorsque le programme informatique est exécuté sur l'ordinateur :
- traitement des informations obtenues sur l'unité d'introduction (12) par une unité de détection (14) et une unité de mesure (16), les informations obtenues sur l'unité d'introduction (12) concernant des critères et des valeurs de seuil concernant la situation du trafic, les informations obtenues par l'unité de détection (14) concernant la détection d'objets (24) présents dans l'environnement du véhicule (22) et les informations obtenues par l'unité de mesure (16) concernant la détermination de l'état de déplacement du véhicule (22) concerné,
- production de signaux de commande des modules intervenant sur l'état de déplacement du véhicule (22), des signaux de commande pouvant être utilisés pour commander un système de freinage (39) pour qu'il actionne des freins (54) et
les signaux de commande pouvant être utilisés dans une transmission automatique (44) pour ouvrir un embrayage (42) et interrompre la chaîne de couple de rotation en cas d'actionnement des freins (54).
